# EUROPÄISCHE PATENTANMELDUNG

(11) **EP 2 393 126 A2**
(43) Veröffentlichungstag der Anmeldung: **07.12.2011**
(21) Anmeldenummer: 11004053.2
(22) Anmeldetag: 17.05.2011
(51) Int. Cl.: H01L 31/048

(54) **Einrichtung zur Gewinnung von elektrischem Strom und/oder Wärme**

(30) Priorität: 07.06.2010 AT 9292010
(71) Anmelder: Lenz, Bernhard, 6858 Schwarzach (AT)
(72) Erfinder: Lenz, Bernhard, 6858 Schwarzach (AT)
(74) Vertreter: Fechner, Thomas

(57) **Zusammenfassung**

Einrichtung zur Gewinnung von elektrischem Strom und/oder Wärme, insbesondere Warmwasser, aus Sonneneinstrahlung, wobei die Einrichtung zumindest eine Deckplatte (1) und zumindest eine Grundplatte (2) und zumindest eine, insbesondere umlaufende, Seitenwand (3) aufweist und die Deckplatte (1) und die Grundplatte (2) und die Seitenwand (3) einen Hohlraum (4) begrenzen, wobei zumindest ein Absorberkörper (5) zur Aufnahme von Wärme, vorzugsweise aus Metall, frei von stoffschlüssigen Befestigungen im Hohlraum (4) angeordnet ist.

## Beschreibung

Die vorliegende Erfindung betrifft eine Einrichtung zur Gewinnung von elektrischem Strom und/oder Wärme, insbesondere Warmwasser, aus Sonneneinstrahlung, wobei die Einrichtung zumindest eine Deckplatte und zumindest eine Grundplatte und zumindest eine, insbesondere umlaufende, Seitenwand aufweist und die Deckplatte und die Grundplatte und die Seitenwand einen Hohlraum begrenzen.

Gattungsgemäße Einrichtungen werden häufig auch als Solarkollektoren bezeichnet. Sie können der Gewinnung von elektrischem Strom aber auch der Gewinnung von Wärme, insbesondere zur Warmwasseraufbereitung, dienen. Es sind auch gattungsgemäße Einrichtungen bekannt, mit denen sowohl elektrischer Strom als auch Wärme gewonnen wird. Zur Übertragung der Wärme auf ein Wärmeübertragungsmedium werden beim Stand der Technik in gattungsgemäßen Einrichtungen Absorberkörper eingesetzt. Diese sind in der Regel von einem Wärmeübertragungsmedium durchströmt. Das Wärmeübertragungsmedium nimmt im Absorber die von der Sonneneinstrahlung eingetragene Wärme auf, um sie dann zu Wärmetauschern, Warmwasserboilern und dergleichen zu transportieren. Beim Stand der Technik ist es durch offenkundige Vorbenutzung bekannt, die Absorberkörper fix an der Deckplatte der gattungsgemäßen Einrichtung, z. B. durch ankleben zu befestigen, um eine möglichst gute Wärmeübertragung von der Deckplatte auf den Absorberkörper zu gewährleisten.

Bei gattungsgemäßen Einrichtungen gemäß des Standes der Technik wurde allerdings in der Praxis beobachtet, dass es durch thermisch verursachte Spannungen zu Beeinträchtigungen kommen kann.

Aufgabe der Erfindung ist es daher, gattungsgemäße Einrichtungen dahingehend zu verbessern, dass sie besser die im praktischen Betrieb auftretenden großen thermischen Unterschiede verkraften.

Die Aufgabe wird gelöst, indem zumindest ein Absorberkörper zur Aufnahme von Wärme, vorzugsweise aus Metall, frei von stoffschlüssigen Befestigungen im Hohlraum angeordnet ist.

Bevorzugt ist vorgesehen, dass der zumindest eine Absorberkörper frei schwimmend im Hohlraum zwischen Deckplatte, Grundplatte und Seitenwand angeordnet ist. Dies bedeutet insbesondere, dass der Absorberkörper nirgends stoffschlüssig befestigt bzw. fixiert ist und insbesondere weder an Deckplatte, Grundplatte noch Seitenwand stoffschlüssig befestigt ist. Sämtliche stoffschlüssigen Befestigungen des Absorberkörpers wie z.B. Verkleben, Verlöten, Verschweißen und dergleichen sind somit vermieden. Bevorzugt sind auch alle formschlüssigen Befestigungen des Absorberkörpers wie z.B. Annieten, Anschrauben vermieden. Ein wesentlicher Effekt ist dabei, dass sich der vorzugsweise aus Metall bestehende oder vorzugsweise Metall aufweisende Absorberkörper entsprechend der auf ihn einwirkenden Wärme bzw. Sonneneinstrahlung ausdehnen oder zusammenziehen kann, ohne dass es hierdurch zu thermisch bedingten Spannungen in der Einrichtung kommt.

Um einen guten thermischen Wärmeübergang von der Deckplatte in den Absorber zu gewährleisten, sehen bevorzugte erfindungsgemäße Ausführungsbeispiele vor, dass der Absorber an die Deckplatte angedrückt wird. Bevorzugt verbleibt dabei aber zumindest in Richtung hin zu den Seitenwänden ein Spiel, so dass eine fixe Befestigung auch in diesen Ausgestaltungsformen vermieden wird. Der Absorber kann somit z.B. ausschließlich reib- bzw. kraftschlüssig im Hohlraum gehalten sein. Weiters ist es günstig, wenn das Mittel, mit dem der Absorber an die Deckplatte angedrückt wird, elastisch ausgebildet ist. Bevorzugte Ausgestaltungsformen sehen dabei z. B. vor, dass im Hohlraum zusätzlich zum Absorberkörper ein Stützkörper zum Andrücken des Absorberkörpers an die Deckplatte angeordnet ist. Dieser Stützkörper ist günstigerweise elastisch ausgebildet. Bevorzugt ist der Stützkörper wärmeisolierend ausgebildet. Weiters ist bevorzugt vorgesehen, dass der Stützkörper flächig ausgedehnt ist. Um sowohl das Andrücken als auch die Wärmeisolierung zu gewährleisten, können z. B. zellige elastische Kunststoffe wie z. B. temperaturbeständige PU-Hartschäume eingesetzt werden.

Erfindungsgemäße Einrichtungen können ausschließlich zur Gewinnung von elektrischem Strom ausgelegt sein. Es ist aber genauso gut möglich, erfindungsgemäße Einrichtungen nur für die Gewinnung von Wärme auszugestalten. Bevorzugte Ausgestaltungsformen sehen allerdings vor, dass erfindungsgemäße Einrichtungen sowohl zur Gewinnung von elektrischem Strom als auch von Wärme ausgebildet sind. Insbesondere bei den Varianten zur Gewinnung von elektrischen Strom kann z. B. vorgesehen sein, dass die Deckplatte mehrschichtig aufgebaut ist, wobei zwischen zwei tragenden Schichten zumindest eine Schicht mit einem oder mehreren Photovoltaikmodulen zur Gewinnung von elektrischem Strom angeordnet ist. Insbesondere bei solchen Ausgestaltungsformen wird ein zusätzlicher Effekt durch den vorzugsweise direkt an die Deckplatte angedrückten Absorber erreicht, indem dieser zur Kühlung der Photovoltaikmodule beiträgt, womit deren Wirkungsgrad und damit der elektrische Ertrag erhöht wird. Die dabei in den Absorberkörper eingetragene Wärme kann über ein entsprechendes Wärmeübertragungsmedium, wie es beim Stand der Technik in verschiedenen Ausgestaltungsformen bekannt ist, als Wärmequelle für einen Warmwasserboiler, einen Wärmetauscher oder dergleichen verwendet werden. Der Absorberkörper kann bevorzugt aus einem aufgekanteten Blech bestehen. Der Stützkörper kann ein wärmeisolierendes Bett bilden, so dass keine Wärme in Richtung Grundplatte verloren geht. Weitere bevorzugte Ausgestaltungsformen sehen zur möglichst effektiven Wärmeübertragung zwischen Deckplatte und Absorberkörper vor, dass der Absorberkörper , vorzugsweise vollflächig, direkt oder unter Zwischenlage eines Wärmeübertragungsgels an der Deckplatte anliegt, vorzugsweise an die Deckplatte angedrückt ist.

Weiters ist es günstig, wenn der Absorberkörper zumindest bereichsweise ein Hohlkörper mit zumindest einem Zulauf und/oder Ablauf für zumindest ein Wärmeträgermedium ist. Der Absorberkörper kann in unterschiedlichsten Ausgestaltungsformen ausgebildet sein. Z. B. ist es möglich, als Absorberkörper einen, insbesondere schlangenförmig verlaufendes Rohrsystem einzusetzen. An dieses kann zusätzlich ein Absorberblech angebracht sein. Zur Ausbildung eines Hohlkörpers sehen bevorzugte Ausgestaltungsformen aber vor allem vor, dass der Absorberkörper ein Rollbondingblech und/oder ein Kurpferabsorber aufweist oder ist.

Rollbondingbleche sind beim Stand der Technik bekannt. Sie entstehen, indem man zwei Bleche durch einen Walzvorgang bei großem Druck zusammenfügt. Bei diesem Vorgang spricht man auch von dem sogenannten Rollbondverfahren. Die Hohlräume in diesem Rollbondingblech können z. B. erzeugt werden, indem beim Walzen der beiden Bleche bestimmte Teile des Blechs ausgespart bzw. mit Trennmitteln behandelt werden, so dass sich die Bleche in diesen Bereichen nicht miteinander verbinden. Anschließend können diese Bereiche aufgeblasen werden, so dass dort Kanäle bzw. Hohlräume gebildet werden.

Bevorzugte Ausgestaltungsformen der Erfindung sehen vor, dass die Deckplatte und/oder zumindest eine tragende Schicht der Deckplatte und/oder die Grundplatte Glas aufweist bzw. aufweisen oder als Glasplatte ausgebildet ist bzw. sind. Als, vorzugsweise umlaufende, Seitenwand können verschiedenste rahmenartige Gebilde eingesetzt werden. Besonders einfach herstellbar aber auch dauerhaft elastisch kann die Seitenwand ausgestaltet werden, indem die Seitenwand zumindest in Richtung ihrer Erstreckung zwischen Deckplatte und Grundplatte zu zumindest 90%, vorzugsweise vollständig, als Klebstoffkörper ausgebildet ist. Weiters sehen bevorzugte Ausgestaltungsformen vor, dass in der Seitenwand und/oder zwischen der Seitenwand und der Deckplatte und/oder zwischen der Seitenwand und der Grundplatte und/oder in der Deckplatte und/oder in der Grundplatte zumindest eine Belüftungsöffnung ausgebildet ist. Durch die Ent- bzw. Belüftungsöffnungen kann ein feuchtigkeitsbedingter Beschlag der Innenseiten von Deck- und/oder Grundplatte verhindert werden. Um auch bei großflächigen erfindungsgemäßen Einrichtungen die nötige Stabilität zu erreichen, kann vorgesehen sein, dass die Deckplatte und die Grundplatte mittels einem oder mehreren, den Hohlraum durchquerenden Stützstegen miteinander verbunden sind und der oder die Stützstege mit Spiel durch Ausnehmungen im Absorberkörper hindurchgeführt sind. Das genannte Spiel kann erreicht werden, indem der Durchmesser des Stützsteges entsprechend kleiner als die Querschnittsflächen der Ausnehmungen im Absorberkörper sind, so dass sich der Absorberkörper trotzt der Stützstege thermisch ausdehnen und zusammenziehen kann, ohne dass es dabei zu thermischen Verspannungen in der erfindungsgemäßen Einrichtung kommt.

Weitere Einzelheiten und Merkmale bevorzugter Ausgestaltungsformen der Erfindung werden anhand der in den Fig. gezeigten Ausführungsbeispiele erläutert. Es zeigen:
- Fig.1 bis 3: Darstellungen zu einem ersten erfindungsgemäßen Ausführungsbeispiel und
- Fig. 4 bis: 7 Darstellungen zu einem zweiten erfindungsgemäßen Ausführungsbeispiel.

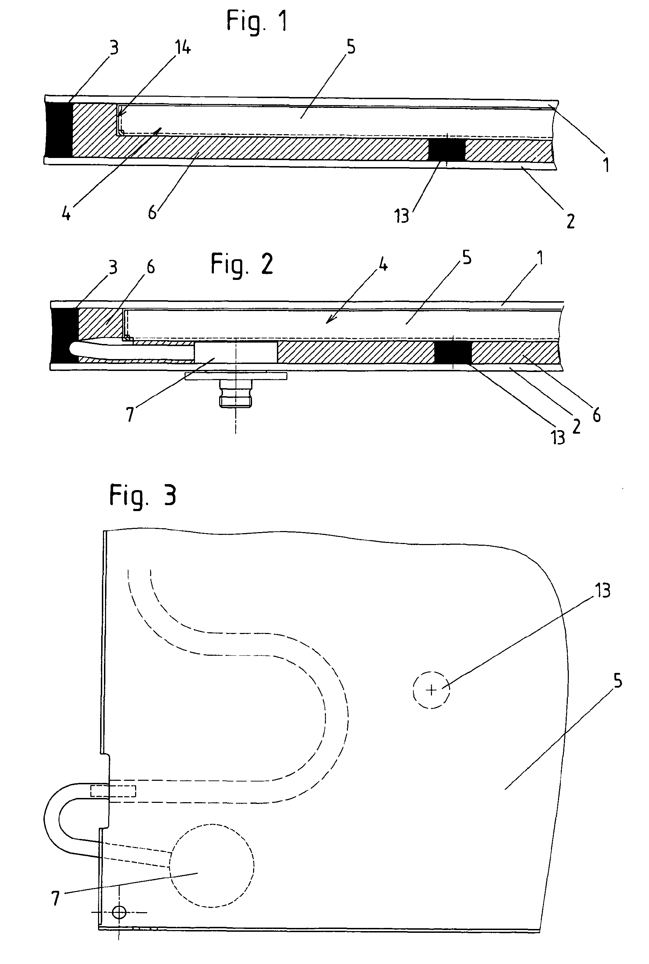

In Fig. 1 handelt es sich um eine erfindungsgemäße Einrichtung in Form eines Solarkollektors, welcher ausschließlich der Wärmegewinnung dient. Bei der Grundplatte 2 und der Deckplatte 1 handelt es sich bevorzugt um Glasplatten. Die Seitenwand 3 ist bevorzugt als umlaufende Kleberaupe ausgeführt. Geeignete Klebstoffe sind beim Stand der Technik bekannt. Sie können z. B. auf Silikon- oder Epoxidbasis hergestellt sein. Zwischen Deckplatte 1, Grundplatte 2 und der Seitenwand 3 befindet sich der Hohlraum 4, in dem der Absorberkörper 5 angeordnet ist. Beim Absorberkörper 5 handelt es sich um einen Hohlkörper, welcher im Betrieb von einem Wärmeträgermedium durchströmt wird. Fig. 2 zeigt der Vollständigkeit halber einen Zu- und/oder Ablauf 7, über den das Wärmeträgermedium in den Innenhohlraum des Absorberkörpers 5 ein- und/oder ausströmen kann. Der Absorberkörper 5 kann z. B. aus einem abgekanteten Absorberblech, z. B. einem Rollbondingblech oder einem Kupferabsorber bestehen und in ein aus dem Stützkörper 6 gebildetes Isolierbett eingelegt sein. Das Isolierbett bzw. der Stützkörper 6 können dabei zwei Aufgaben erfüllen. Zum einen wird hierdurch erreicht, dass thermische Verluste in Richtung Grundplatte 2 möglichst weitgehend vermieden sind. Die erste Aufgabe des Stützkörpers 6 ist somit die thermische Isolierung. Weiters kann der, bevorzugt elastisch ausgebildete, Stützkörper 6 dafür sorgen, dass der Absorberkörper 5 zur optimalen thermischen Übertragung an die Deckplatte 1 angedrückt wird. Beim Stützkörper 6 kann es sich z. B. um einen PU-Hartschaum handeln. Zwischen Absorberkörper 5 und Deckplatte 1 kann ein Wärmeübertragungsgel angeordnet sein. Gemäß der Erfindung ist der Absorberkörper 5 nirgends stoffschlüssig befestigt, sondern ist frei von stoffschlüssigen Befestigungen im Hohlraum 4 angeordnet. Hierdurch kann sich der, meist aus Metall gebildete, Absorberkörper 5 thermisch bedingt ausdehnen und zusammenziehen, ohne dass es hierdurch zu Spannungen in der erfindungsgemäßen Einrichtung kommt. Z. B. kann vorgesehen sein, dass der Absorberkörper 5 mit Spiel 14 im Stützkörper 6 liegt. Weiters können durch die elastische Ausbildung des Stützkörpers 6 auch thermische Veränderungen des Absorberkörpers ausgeglichen werden. Zur Abstützung des Absorberkörpers 5 können zusätzliche Auflagestege 13 vorgesehen sein. Auch an diesen ist der Absorberkörper 5 nicht stoffschlüssig befestigt. Über eine entsprechende elastische Ausbildung und Vorspannung der Seitenwände 3 kann ebenfalls, gegebenenfalls zusätzlich zum Stützkörper 6, eine permanente Vorspannung erzeugt werden, welche dafür sorgt, dass der Absorberkörper 5 an die Deckplatte 1 angedrückt wird. In diesem Sinne kann vorgesehen sein, dass die Deckplatte 1 und die Grundplatte 2 mittels der, vorzugsweise elastisch ausgebildeten, Seitenwand 3 in Richtung aufeinander zu vorgespannt sind. Diese Vorspannung kann auch durch zumindest einen oder mehrere gegebenenfalls vorhandene, vorzugsweise elastisch ausgebildete, Stützstege 11 zwischen Deckplatte 1 und Grundplatte 2 unterstützt oder erzeugt werden. Auch bei diesen Ausgestaltungsformen ist ein schwimmender Ausgleich der Wärmeausdehnung und auch eines entsprechend thermisch bedingten Zusammenziehens zwischen den verschiedenen Materialien sichergestellt. Fig. 3 zeigt noch eine schematische Draufsicht auf den Absorberkörper 5 gemäß der Fig. 1 und 2 im Bereich eines Zu- und/oder Ablaufs 7. In einer anderen Ausgestaltungsform kann vorgesehen sein, dass das vorzugsweise aufgekantete Absorberblech mit dem Stützkörper 6 bzw. dem Isolierbett, in das er hineingelegt ist, zu einem Verbund verklebt wird. Durch den somit entstandenen Luftraum wird der Treibhauseffekt erzielt. Es handelt sich dabei aber trotzdem nicht um eine stoffschlüssige Befestigung des Absorberkörpers im Hohlraum 4.

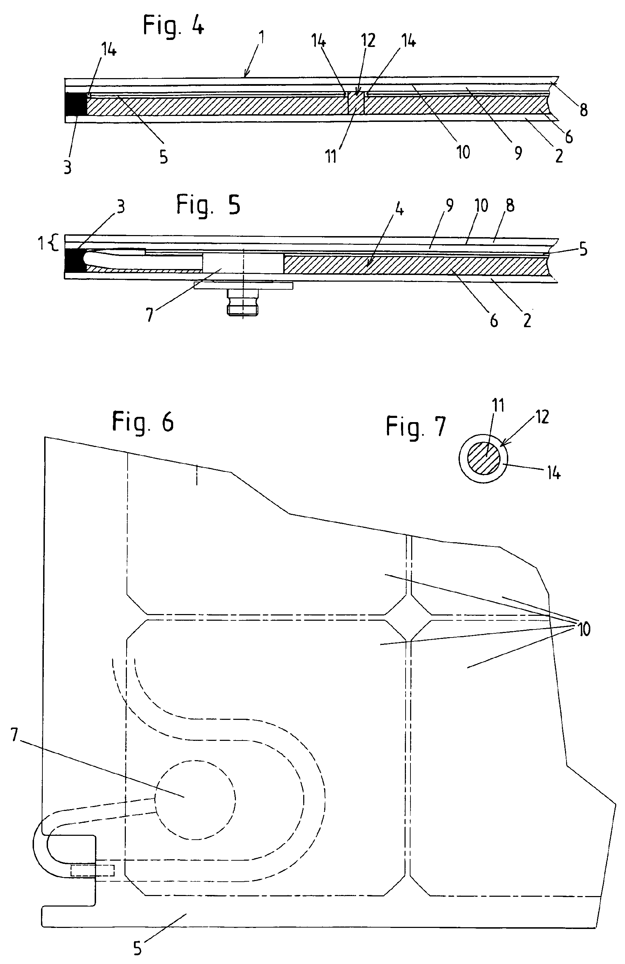

Bei dem Ausführungsbeispiel gemäß der Fig. 4 bis 6 handelt es sich um eine erfindungsgemäße Einrichtung, die sowohl zur Gewinnung von elektrischem Strom als auch von Wärme dient. Die Deckplatte 1 ist hierbei mehrschichtig ausgebildet. Sie weist zwei tragende Schichten 8 und 9 auf, zwischen denen eine Schicht mit einem oder mehreren Photovoltaikmodulen 10 zur Gewinnung von elektrischem Strom angeordnet ist. Bei den tragenden Schichten 8 und 9 sowie bei der Grundplatte handelt es sich günstigerweise wiederum um Glasplatten. Insbesondere bei der Grundplatte 2 können aber auch andere Materialien eingesetzt werden. Für die Seitenwand 3 gilt das zum ersten Ausführungsbeispiel Gesagte. Auch hierbei handelt es sich günstigerweise um einen Klebstoffkörper, welcher eine elastische Vorspannung erzeugen kann. Auch bei diesem Ausführungsbeispiel ist der Absorberkörper 5, welcher grundsätzlich wieder in den bereits genannten Ausgestaltungsformen ausgeführt sein kann, zwischen einem entsprechen elastischen, vorzugsweise vollflächigen Stützkörper 6 und der Deckplatte 1 eingelegt. Auch hier ist der Absorberkörper 5 ausschließlich schwimmend gelagert. Um sich entsprechend thermisch bedingt ausdehnen und zusammenziehen zu können, ohne dass hierdurch Spannungen erzeugt werden, ist günstigerweise an den eingezeichneten Stellen jeweils ein Spiel 14 vorgesehen. Auch bei diesem Ausführungsbeispiel liegt der Absorberkörper 5 ohne Verklebung oder dergleichen an der Rückseite der Deckplatte 1 an. Um eine vollflächige Auflage des Absorberkörpers an der Deckplatte 1 zu erreichen, wird der Verbund aus Grundplatte 2, Deckplatte 1 und Seitenwand 3, vorzugsweise unter einem Flächendruck, verklebt, wobei Absorberkörper 5 und ggfs. Abstützkörper 6 ohne fixe Befestigung frei in den Hohlraum 4 eingelegt sind. Um bei großflächig ausgestalteten Varianten der Erfindung Deckplatte 1 und Grundplatte 2 nicht nur im Bereich der Seitenwand 3 miteinander zu verspannen bzw. aneinander abzustützen, können, wie in Fig. 4 eingezeichnet, in bevorzugten Ausgestaltungsformen zusätzliche Stützstege 11 vorgesehen sein, welche die Deckplatte 1 mit der Grundplatte 2 verbinden. Auch bei den Stützstegen 11 kann es sich um Klebekörper bzw. Punktverklebungen handeln. Diese können ebenfalls zusammen mit der elastischen Isolierschicht in Form des Stützkörpers 6 für eine permanente Vorspannung im fertig hergestellten Verbund sorgen. Durch das schwimmende Einlegen des Absorberkörpers 5 in den Hohlraum 4 dieses Verbundes können die unterschiedlichen Wärmeausdehnungen bzw. das thermisch bedingte Zusammenziehen zwischen Glas, Metall und Isolierstoff ausgeglichen werden. Fig. 5 zeigt wiederum einen Schnitt durch dieses Ausführungsbeispiel im Bereich eines Zu- und/oder Ablaufs 7. Fig. 6 zeigt wiederum einen Teilbereich einer Draufsicht auf den Absorberkörper 5 im Bereich des Zu- und/oder Ablaufs 7. Die darüber liegenden Photovoltaikmodule 10 sind gestrichelt angedeutet.

Fig. 7 zeigt noch schematisch eine Draufsicht im Bereich eines durch die Ausnehmung 12 im Absorberkörper 5 hindurchgeführten Stützsteges 11. Hier ist zu sehen, dass um den Stützsteg 11 herum in der Ausnehmung 12 noch ausreichend Spiel 14 vorgesehen ist, damit sich der Absorberkörper 5, welcher in der Regel aus Metall besteht, thermisch bedingt ausdehnen und zusammenziehen kann, ohne dass es hierdurch zur Kollision mit dem Stützsteg 11 kommt.

In beiden gezeigten Ausführungsbeispielen können in der Seitenwand 3 und/oder zwischen der Seitenwand 3 und der Deckplatte 1 und/oder zwischen der Seitenwand 3 und der Grundplatte 2 und/oder in der Deckplatte 1 und/oder in der Grundplatte 2 eine oder mehrere Belüftungsöffnungen ausgebildet sein, um ein Beschlagen zu vermeiden.

### Legende

### zu den Hinweisziffern:

- 1: Deckplatte
- 2: Grundplatte
- 3: Seitenwand
- 4: Hohlraum
- 5: Absorberkörper
- 6: Stützkörper
- 7: Zu- und/oder Ablauf
- 8: tragende Schicht
- 9: tragende Schicht
- 10: Photovoltaikmodul
- 11: Stützsteg
- 12: Ausnehmung
- 13: Auflagensteg
- 14: Spiel

## Patentansprüche

1. Einrichtung zur Gewinnung von elektrischem Strom und/oder Wärme, insbesondere Warmwasser, aus Sonneneinstrahlung, wobei die Einrichtung zumindest eine Deckplatte (1) und zumindest eine Grundplatte (2) und zumindest eine, insbesondere umlaufende, Seitenwand (3) aufweist und die Deckplatte (1) und die Grundplatte (2) und die Seitenwand (3) einen Hohlraum (4) begrenzen, **dadurch gekennzeichnet, dass** zumindest ein Absorberkörper (5) zur Aufnahme von Wärme, vorzugsweise aus Metall, frei von stoffschlüssigen Befestigungen im Hohlraum (4) angeordnet ist.

2. Einrichtung nach Anspruch 1, **dadurch gekennzeichnet, dass** im Hohlraum (4) zusätzlich zum Absorberkörper (5) ein, vorzugsweise wärmeisolierender und/oder flächiger Stützkörper (6) zum Andrücken des Absorberkörpers (5) an die Deckplatte (1) angeordnet ist.

3. Einrichtung nach Anspruch 1 oder 2, **dadurch gekennzeichnet, dass** der Absorberkörper (5), vorzugsweise vollflächig, direkt oder unter Zwischenlage eines Wärmeübertragungsgels an der Deckplatte (1) anliegt, vorzugsweise an die Deckplatte (1) angedrückt ist.

4. Einrichtung nach einem der Ansprüche 1 bis 3, **dadurch gekennzeichnet, dass** der Absorberkörper (5) zumindest bereichsweise ein Hohlkörper mit zumindest einem Zulauf und/oder Ablauf (7) für zumindest ein Wärmeträgermedium ist.

5. Einrichtung nach einem der Ansprüche 1 bis 4, **dadurch gekennzeichnet, dass** der Absorberkörper (5) ein Rollbondingblech und/oder ein Kurpferabsorber aufweist oder ist.

6. Einrichtung nach einem der Ansprüche 1 bis 5, **dadurch gekennzeichnet, dass** die Deckplatte (1) und die Grundplatte (2) mittels eines oder mehreren, den Hohlraum (4) durchquerenden Stützstegen (11) miteinander verbunden sind und der oder die Stützstege (11) mit Spiel durch Ausnehmungen (12) im Absorberkörper (5) hindurchgeführt sind.

7. Einrichtung nach einem der Ansprüche 1 bis 6, **dadurch gekennzeichnet, dass** die Deckplatte (1) und/oder zumindest eine tragende Schicht (8, 9) der Deckplatte (1) und/oder die Grundplatte (2) Glas aufweist bzw. aufweisen oder als Glasplatte ausgebildet ist bzw. sind.

8. Einrichtung nach einem der Ansprüche 1 bis 7, **dadurch gekennzeichnet, dass** die Seitenwand (3) zumindest in Richtung ihrer Erstreckung zwischen Deckplatte (1) und Grundplatte (2) zu zumindest 90%, vorzugsweise vollständig, als Klebstoffkörper ausgebildet ist.

9. Einrichtung nach einem der Ansprüche 1 bis 8, **dadurch gekennzeichnet, dass** in der Seitenwand (3) und/oder zwischen der Seitenwand (3) und der Deckplatte (1) und/oder zwischen der Seitenwand (3) und der Grundplatte (2) und/oder in der Deckplatte (1) und/oder in der Grundplatte (2) eine oder mehrere Belüftungsöffnungen ausgebildet sind.

10. Einrichtung nach einem der Ansprüche 1 bis 9, **dadurch gekennzeichnet, dass** die Deckplatte (1) und die Grundplatte (2) mittels der, vorzugsweise elastisch ausgebildeten, Seitenwand (3) und/oder mittels zumindest eines, die Deckplatte (1) mit der Grundplatte (2) verbindenden, vorzugsweise elastisch ausgebildeten, Stützsteges (11) in Richtung aufeinander zu vorgespannt sind.
